# EUROPÄISCHE PATENTSCHRIFT

(11) **EP 3 704 533 B1**
(45) Veröffentlichungstag und Bekanntmachung des Hinweises auf die Patenterteilung: **27.05.2026**
(21) Anmeldenummer: 18796625.4
(22) Anmeldetag: 30.10.2018
(51) Int. Cl.: G02B 27/09, G02B 27/01

(54) **LICHTLEITER, ABBILDUNGSVORRICHTUNG UND HMD MIT SEPARATEN ABBILDUNGSKANÄLEN**
LIGHT GUIDE, IMAGING DEVICE AND HMD HAVING SEPARATE IMAGING CHANNELS
CONDUCTEUR OPTIQUE, DISPOSITIF D'IMAGERIE ET HMD COMPRENANT DES CANAUX D'IMAGERIE SÉPARÉS

(30) Priorität: 03.11.2017 DE 102017125731
(43) Veröffentlichungstag der Anmeldung: 09.09.2020
(73) Patentinhaber: CARL ZEISS JENA GmbH, 07745 Jena (DE)
(72) Erfinder: DOBSCHAL, Hans-Jürgen, 07745 Jena (DE); HILLENBRAND, Matthias, 07745 Jena (DE); LINDIG, Karsten, 07745 Jena (DE)
(74) Vertreter: PATERIS Patentanwälte PartmbB
(86) Internationale Anmeldenummer: PCT/EP2018/079652
(87) Internationale Veröffentlichungsnummer: WO 2019/086419

(56) Entgegenhaltungen:
- DE-A1- 102014 115 341
- JP-A- 2002 031 777
- US-A1- 2014 226 215
- US-A1- 2017 184 855
- US-A1- 2017 285 347

## Beschreibung

Die vorliegende Erfindung betrifft einen Lichtleiter für eine Abbildungsvorrichtung zum Erzeugen eines virtuellen Bildes von einem auf einem Bildgeber dargestellten Ausgangsbild. Daneben betrifft die Erfindung ein Head-Mounted Display, also eine am Kopf befestigte Anzeige, kurz HMD.

Eine gängige Form von Head-Mounted Displays verwendet Bildschirme, die vor den Augen getragen werden und dem Benutzer elektronische Bilder wie etwa computergenerierte Bilder oder von Kameras aufgenommene Bilder, präsentieren. Derartige Head-Mounted Displays sind häufig voluminös und erlauben keine unmittelbare Wahrnehmung der Umgebung.

In jüngerer Zeit sind Head-Mounted Displays entwickelt worden, die in der Lage sind, elektronische Bilder mit dem unmittelbar wahrgenommenen Bild der Umgebung zu kombinieren und so dem Benutzer ein elektronisches Bild darzubieten, ohne die unmittelbare Wahrnehmung der Umgebung zu verhindern. Derartige Head-Mounted Displays, die, wenn sie in Brillenform ausgebildet sind, auch Datenbrillen genannt werden, ermöglichen die Nutzung dieser Technologie im alltäglichen Leben.

Beim Kombinieren der elektronischen Bilder mit dem unmittelbar wahrgenommenen Bild der Umgebung unterscheidet man bei Datenbrillen im Wesentlichen die folgenden Prinzipien, auf denen das Kombinieren beruhen kann:
1. Verwendung einer normalen Brille mit vorgesetztem Strahlkombinierer (z.B. Strahlteilerwürfel).
2. Einkopplung des Lichtes zwischen Kopf und Brillenglas von der Seite aus und Reflexion des Lichtes an der Innenseite des Brillenglases in Richtung auf das Auge, wobei unterstützend Beugungsgitter, Fresnelelemente o.ä. eingesetzt werden können.
3. Führung des Lichtes des elektronischen Bildes mittels Totalreflektion im Brillenglas und Zusammenführen des Strahlengangs des elektronischen Bildes mit dem unmittelbaren Bild der Umgebung mit Hilfe einer im Brillenglas angeordneten Auskopplungsstruktur zum Auskoppeln des Strahlengangs des elektronischen Bildes aus dem Brillenglas in Richtung auf das Auge. Das Brillenglas dient dabei als Lichtleiter für das eingekoppelte Licht.

Das erste Prinzip funktioniert zwar optisch gut, hat aber nur eine sehr geringe soziale Akzeptanz, da der vorgesetzte Strahlkombinierer nach außen sehr auffällig und groß ist. Außerdem wird die Brille dadurch vorderlastig
Das zweite Prinzip lässt sich anatomisch nur bei stark vergrößertem Abstand zwischen Brille und Kopf realisieren, was ebenfalls nicht akzeptabel ist.

Die erfolgversprechenderen Ansätze gehen daher vom dritten Prinzip aus, also von der Lichtführung im Brillenglas als Lichtleiter. Die Auskopplungsstruktur kann dabei als Beugungsgitter, als teiltransparenter, schräg gestellter Spiegel oder in Form von teiltransparenten Fresnelelementen ausgebildet sein. Im Falle eines Beugungsgitters wird der Strahlengang des elektronischen Bildes bspw. über das Beugungsmaximum der 1. Ordnung aus dem Brillenglas ausgekoppelt, während über das Beugungsmaximum der 0. Ordnung das Beobachtungslicht die Auskopplungsstruktur möglichst unbeeinträchtigt passieren kann.

In einem HMD, welches nach dem oben beschriebenen dritten Prinzip arbeitet, werden von einem Feldpunkt des vom einem Ausgangsbild dargestellten Feldes (im Folgenden Ausgangsbildfeld genannt) ausgehende divergente Strahlenbündel typischerweise kollimiert oder weitgehend kollimiert und im Lichtleiter typischerweise als kollimierte Strahlenbündel geleitet. Der Durchmesser der Strahlenbündel wird dabei durch die Eintrittspupille der Abbildungsvorrichtung, von denen der Lichtleiter Teil ist, festgelegt. Die zentralen Strahlen der Strahlenbündel werden im Folgenden als Hauptstrahlen bezeichnet. Der Winkel zwischen den den linken und den rechten Rand des Ausgangsbildfeldes präsentierenden Strahlenbündeln bzw. zwischen deren Hauptstrahlen wie er im Bereich der Austrittspupille gemessen wird, wird horizontaler Feldwinkel genannt. Als vertikaler Feldwinkel wird der im Bereich der Austrittspupille gemessene Winkel zwischen den die vertikalen Ränder des Ausgangsbildfeldes repräsentierenden Strahlenbündeln bzw. deren Hauptstrahlen bezeichnet. Im Falle eines großen Ausgangsbildfeldes treten große Feldwinkel - insbesondere große horizontale Feldwinkel - auf, was insbesondere dann der Fall ist, wenn beispielsweise ein Bild in 16:9 Format dargestellt werden soll. Der Feldwinkel führt dabei dazu, dass die Querschnittsfläche der Gesamtheit der übertragenen Strahlenbündel mit zunehmenden Abstand vom Auge immer größer wird. Hieraus folgt, dass der Abstand zwischen den äußeren Hauptstrahlen bei großen Feldwinkeln so groß wird, dass in der Regel nicht mehr über eine Seitenfläche des Brillenglases, sondern nur über die Brillenglasrück- oder Vorderfläche eingekoppelt werden kann, was zu großen Einkoppelstrukturen führt. Ein Lichtleiter, bei dem die Einkopplung der Strahlenbündel über die Rückfläche, also der dem Auge zuwendenden Fläche, erfolgt, ist bspw. in US 2011/0062998 A1 beschrieben.

Die US 2012/0057253 A1 beschreibt eine Auskopplungsstruktur, die zwei gegeneinander verkippte Teilflächen aufweist.

Die DE 102015 122 131 B3 beschreibt das Neigen einer gesamten zur Auskopplung eines Abbildungsstrahlengangs aus einem Brillenglas genutzten Fresnelfläche.

Die DE 10 2014 207 492 A1 beschreibt Fresnelflächen, die zum Auskoppeln verwendet werden und eine Abbildung vom Bildgeber oder eines Zwischenbildes des Bildgebers in das virtuelle Zwischenbild vornehmen.

Die DE 10 2014 207 500 B3 beschreibt eine reflektierende Schicht, die sich zwischen dem Einkopplungsbereich eines Brillenglases und der Auskopplungsstruktur des Brillenglases befindet und die zur Strahlführung dient.

Die US 2014/0226215 A1 beschreibt einen Lichtleiter in einem Display zum Darstellen eines virtuellen Bildes, bei dem die Einkopplung des Abbildungsstrahlengangs in den Lichtleiter über die Umfangsfläche des Lichtleiters erfolgt.

Die US 2017/0184855 A1 beschreibt eine Vorrichtung zum Darstellen eines virtuellen Bildes.

Die JP 2002-31777 A zeigt eine elektronische Brille mit einer Abbildungsvorrichtung, die zwei Auskopplungselemente aufweist, deren Orientierungen um eine Achse gegeneinander verkippt sind.

Die DE 10 2014 115 341 A1 beschreibt eine Abbildungsoptik für eine Datenbrille mit einer Auskoppelstruktur, die zwei um eine Achse gegeneinander verkippte Teilstrukturen aufweist.

Die US 2017/0285347 A1 beschreibt Gläser für Datenbrillen, wobei die Gläser um eine Achse gegeneinander verkippte Auskoppelstrukturen aufweisen können.

Es ist Aufgabe der vorliegenden Erfindung, eine Abbildungsvorrichtung und ein HMD zur Verfügung zu stellen, bei denen die Einkoppelstrukturen klein gehalten werden können.

Diese Aufgabe wird durch eine Abbildungsvorrichtung nach Anspruch 1 und ein HMD nach Anspruch 12 gelöst. Die abhängigen Ansprüche enthalten vorteilhafte Ausgestaltungen der Erfindung.

Eine erfindungsgemäße Abbildungsvorrichtung zum Generieren eines virtuellen Bildes umfasst einen Bildgeber mit wenigstens zwei Bildgeberabschnitten zum Darstellen wenigstens zweier Ausgangsbildfeldbereiche eines Ausgangsbildes und einen Lichtleiter, wobei der Lichtleiter umfasst.
- eine Einkoppelstruktur zum Einkoppeln von dem Ausgangsbild ausgehender Strahlenbündel in den Lichtleiter und
- eine flächige Auskoppelstruktur zum Auskoppeln der in den Lichtleiter eingekoppelten Strahlenbündel aus dem Lichtleiter, wobei die flächige Auskoppelstruktur wenigstens zwei Teilflächen umfasst und wobei jede Teilfläche einem anderen der Ausgangsbildfeldbereiche zugeordnet ist und die von dem entsprechenden Ausgangsbildfeldbereich ausgehenden Strahlenbündel auskoppelt.

Erfindungsgemäß sind die Teilflächen der Auskoppelstruktur gegeneinander verkippt. Dabei sind die beiden Teilflächen der Auskoppelstruktur so um zwei zueinander nicht parallele Achsen verkippt, vorzugsweise um zwei zueinander senkrechte Achsen, dass aus im Ausgangsbild vertikal übereinander gelegenen Ausgangsbildfeldbereichen im virtuellen Bild horizontal nebeneinander gelegene Felbereiche erzeugt werden oder aus im Ausgangsbild horizontal nebeneinander gelegenen Ausgangsbildfeldbereichen im virtuellen Bild vertikal übereinander gelegene Felbereiche erzeugt werden.

Dabei brauchen die Bildgeberabschnitte nicht notwendigerweise zusammenzuhängen oder Teil ein und desselben Displays zu sein. Mit anderen Worten, der Bildgeber kann als ein einziges Display oder als eine Anordnung aus mindestens zwei Displays ausgebildet sein. Die mit der erfindungsgemäßen Abbildungsvorrichtung zu erzielenden Wirkungen ergeben sich unmittelbar aus der Verwendung des erfindungsgemäßen Lichtleiters und den damit verbundenen, zuvor beschriebenen Wirkungen.

Die Verkippung der Teilflächen der Auskoppelstruktur gegeneinander ermöglicht es, die von den durch den Lichtleiter übertragenen Strahlenbündeln im Bereich der Einkoppelstruktur eingenommene Querschnittsfläche derart zu manipulieren, dass sie ein Anpassen der Querschnittsfläche an die gewünschten Abmessungen ermöglicht. Insbesondere kann die Querschnittsfläche in Richtung der Dicke des Lichtleiters verringert werden, Dies ermöglicht es, den Lichtleiter derart auszugestalten, dass er eine dem Auge eines Nutzers zuzuwendende Rückfläche, eine vom Auge des Nutzers abzuwendende Vorderfläche und eine die Rückfläche mit der Vorderfläche verbindende Umfangsfläche aufweist, wobei die Einkoppelstruktur derart im Lichtleiter angeordnet ist, dass ein Einkoppeln der Strahlenbündel über die Umfangsfläche erfolgen kann.

Wenn in einem Koordinatensystem, in dem die z-Achse senkrecht auf der die Austrittspupille repräsentierenden Fläche steht und zum Lichtleiter hin weist, die beiden Teilflächen um die y-Achse gegeneinander verkippt sind, können die zu der Austrittspupille gelangenden Strahlenbündel durch Bereiche des Lichtleiters geleitet werden, die in x-Richtung gegeneinander versetzt sind. Dies ermöglicht es beispielsweise, zum Erzeugen des Ausgangsbildes in x-Richtung gegeneinander versetzte Bildgeber zum Darstellen von unterschiedlichen lateralen Ausgangsbildfeldbereichen zu verwenden.

Eine Verkippung der Teilflächen zueinander um die x-Achse ermöglicht es dagegen, die zu der Austrittspupille gelangenden Strahlenbündel im Bereich der Einkoppelstruktur näher aneinander zu führen, wodurch die Ausdehnung der Strahlenbündelverteilung in z-Richtung (Richtung der Dickenausdehnung des Lichtleiters) verringert wird. Genauer gesagt wird, wenn die Strahlenbündel im Bereich der Einkoppelstruktur auf die x-z-Ebene projiziert werden, die Ausdehnung dieser Projektion in z-Richtung verringert. Dies begünstigt die Verwendung von Einkoppelstrukturen mit einer geringeren Ausdehnung in z-Richtung und kann dadurch insbesondere auch bei einem großen horizontalen Ausgangsbildfeld ein Einkoppeln über eine Seitenfläche des Lichtleiters, also über einen seitlich am Lichtleiter angeordneten Abschnitt der Umfangsfläche, ermöglichen. Die Seitenfläche kann dabei auch gleichzeitig die Einkoppelstruktur bilden.

Allgemein lässt sich sagen, dass sich durch ein Verkippen der Teilflächen um zwei zueinander nicht parallele Achsen die Strahlenbündelverteilung im Bereich der Einkoppelstruktur manipulieren lässt, so dass die Strahlenbündelverteilung im Bereich der Einkoppelstruktur eine gewünschte Form aufweist. Insbesondere lässt sich das Seitenverhältnis der Querschnittsfläche der Strahlenbündelverteilung verändern. Dies ermöglicht es beispielsweise Strahlenbündel derart zu versetzen, dass horizontal nebeneinander gelegene Ausgangsbildfeldbereiche durch im Bereich der Einkoppelstruktur durch vertikal versetze Strahlenbündel repräsentiert werden. Zudem besteht die Möglichkeit, diese Strahlenbündel auch noch horizontal gegeneinander zu verschieben. Das Ausgangsbild kann dann zwar nur noch über einen vergrößerten Bildgeber oder einen Bildgeber mit für die Ausgangsbildfeldbereiche getrennten Displays dargestellt werden, jedoch lässt sich die Fläche, auf der das Ausgangsbild dargestellt wird, oder die Position der getrennten Displays optimal an die gewünschte Einkoppelstruktur anpassen.

Als Teilflächen der Auskoppelstruktur können beispielsweise glatte reflektive Flächen zur Anwendung kommen, die gegenüber der Innen- und Vorderfläche derart geneigt sind, dass die durch den Lichtleiter geleiteten Strahlenbündel durch die Rückfläche ausgekoppelt werden. Als glatte Fläche soll dabei eine stetig differenzierbare Fläche angesehen werden.

Alternativ kann jede Teilfläche der Auskoppelstruktur eine facettierte reflektive Fläche sein, wobei die facettierte reflektive Fläche eine glatte Grundfläche und gegenüber der glatten Grundfläche geneigte Facetten umfasst.

Die glatte Fläche oder die glatte Grundfläche kann als ebene Fläche ausgebildet sein. Sie kann aber auch eine abbildende Funktion, beispielsweise eine Licht sammelnde Funktion besitzen. In diesem Fall weist die glatte Fläche bzw. die glatte Grundfläche eine Krümmung auf. Im Falle einer facettierten reflektiven Fläche kann die Krümmung statt in der glatten Grundfläche auch in den Facetten realisiert sein. Die abbildende Funktion der Auskoppelstruktur ermöglicht es, im Bereich der Auskoppelstruktur den Raumbedarf der Strahlenbündel in Richtung der Dicke des Lichtleiters weiter zu verringern. Die glatte Fläche oder glatte Grundfläche kann dabei auch eine Freiformfläche sein. Unter einer Freiformfläche soll hierbei eine komplexe Fläche zu verstehen sein, die sich insbesondere mittels gebietsweise definierter Funktionen, insbesondere zweimal stetig differenzierbarer gebietsweise definierter Funktionen darstellen lässt. Hiervon zu unterscheiden sind einfache Flächen, wie z.B. sphärische Flächen, asphärische Flächen, zylindrische Flächen, torische Flächen, etc.

In einer vorteilhaften weiteren Ausgestaltung des erfindungsgemäßen Lichtleiters umfasst dieser neben der Auskopplungsstruktur ein weiteres reflektives Element, welches insbesondere als glatte reflektive Fläche oder facettierte reflektive Fläche ausgebildet sein kann. Dieses weitere reflektive Element weist eine abbildende Funktion auf. Es kann insbesondere durch eine Freiformfläche realisiert sein. Insbesondere, wenn auch die Auskoppelstruktur eine abbildende Funktion aufweist, sind neben der Auskoppelstruktur und dem weiteren reflektiven Element mit der abbildenden Funktion keine weiteren abbildenden optischen Elemente zwingend notwendig.

Wenn die Auskoppelstruktur eine abbildende Struktur aufweist und/oder ein weiteres reflektives optisches Element mit Abbildungsfunktion vorhanden ist, kann zwischen der Auskoppelstruktur und der Einkoppelstruktur ein Zwischenbild im Lichtlieter generiert werden, welches im Bereich der Einkoppelstruktur eine weitere Reduktion des Platzbedarfs der vom Lichtleiter übertragenen Strahlenbündel in z-Richtung ermöglicht.

In der erfindungsgemäßen Abbildungsvorrichtung können die Bildgeberabschnitte gegeneinander versetzt sein. Der Versatz der Bildgeberabschnitte kann dabei entlang der x-Achse und/oder entlang der y-Achse erfolgen. Dadurch erhält man eine große Freiheit in der Anordnung der Bildgeberabschnitte, so dass die Anordnung der Bildgeberabschnitte an die Form der gewünschten Einkoppelstruktur und damit an den Lichtleiter angepasst werden kann.

Der Versatz der Bildgeberabschnitte kann dadurch realisiert werden, dass ein Display Verwendung findet, welches groß genug ist, dass unterschiedliche Ausgangsbildfeldbereiche auf dem Display gegeneinander versetzte dargestellt werden können. Die Bildgeberabschnitte sind dann durch die Abschnitte des Displays, auf denen die jeweiligen Ausgangsbildfeldbereiche dargestellt werden, gegeben. Alternativ besteht die Möglichkeit, für jeden Ausgangsbildfeldbereich ein eigenes Display vorzusehen, wobei die Displays dann gemeinschaftlich den Bildgeber bilden. In diesem Fall brauchen die Displays nicht größer als die darzustellenden Ausgangsbildfeldbereiche zu sein, so dass die kombinierte Displayfläche nicht größer zu sein braucht als die dazustellende Fläche des Ausgangsbildes. Letzteres ermöglicht zudem, nicht nur die Position der Bildgeberabschnitte zu optimieren, sondern auch, die relative Neigung zwischen den Bildgeberabschnitten zu optimieren, was zu Verbesserung der Korrektion der Abbildung beitragen kann.

Ein erfindungsgemäßes HMD ist mit einer erfindungsgemäßen Abbildungsvorrichtung ausgestattet. Insbesondere kann das erfindungsgemäße HMD als Brille ausgebildet sein, so dass es eine Datenbrille darstellt. Die Verwendung einer erfindungsgemäßen Abbildungsvorrichtung ermöglicht es, HMDs - und insbesondere Datenbrillen - herzustellen, die im Bereich der Einkoppelstruktur des Lichtleiters kompakt ausgestaltet sein können.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.
- Figur 1: zeigt in einer schematischen Darstellung eine Abbildungsvorrichtung mit einem Lichtleiter nach Stand der Technik.
- Figur 2: zeigt in einer schematischen Darstellung ein erstes Ausführungsbeispiel für eine Abbildungsvorrichtung mit einem Lichtleiter, in dem Teilflächen der Auskoppelstruktur des Lichtleiters gegeneinander verkippt sind.
- Figur 3: zeigt in einer schematischen Darstellung ein zweites Ausführungsbeispiel für eine Abbildungsvorrichtung mit einem Lichtleiter, in dem Teilflächen der Auskoppelstruktur des Lichtleiters gegeneinander verkippt sind.
- Figur 4: zeigt eine mögliche Anordnung von Ausgangsbildfeldbereichen eines Ausgangsbildes auf einem Display.
- Figur 5: zeigt das von der Abbildungsvorrichtung auf der Basis der Ausgangsbildfeldbereiche des Ausgangsbildes aus Figur 4 generierte virtuelle Bild.
- Figur 6: zeigt eine mögliche alternative Anordnung von Ausgangsbildfeldbereichen eines Ausgangsbildes auf einem Display.
- Figur 7: zeigt das von der Abbildungsvorrichtung auf der Basis der Ausgangsbildfeldbereiche des Ausgangsbildes aus Figur 6 generierte virtuelle Bild.
- Figur 8: zeigt in einer schematischen Darstellung ein drittes Ausführungsbeispiel für eine Abbildungsvorrichtung mit einem Lichtleiter, in dem Teilflächen der Auskoppelstruktur des Lichtleiters gegeneinander verkippt sind.
- Figur 9: zeigt in einer schematischen Darstellung ein viertes Ausführungsbeispiel für eine Abbildungsvorrichtung mit einem Lichtleiter, in dem Teilflächen der Auskoppelstruktur des Lichtleiters gegeneinander verkippt sind.
- Figur 10: zeigt ein Beispiel für eine Datenbrille.

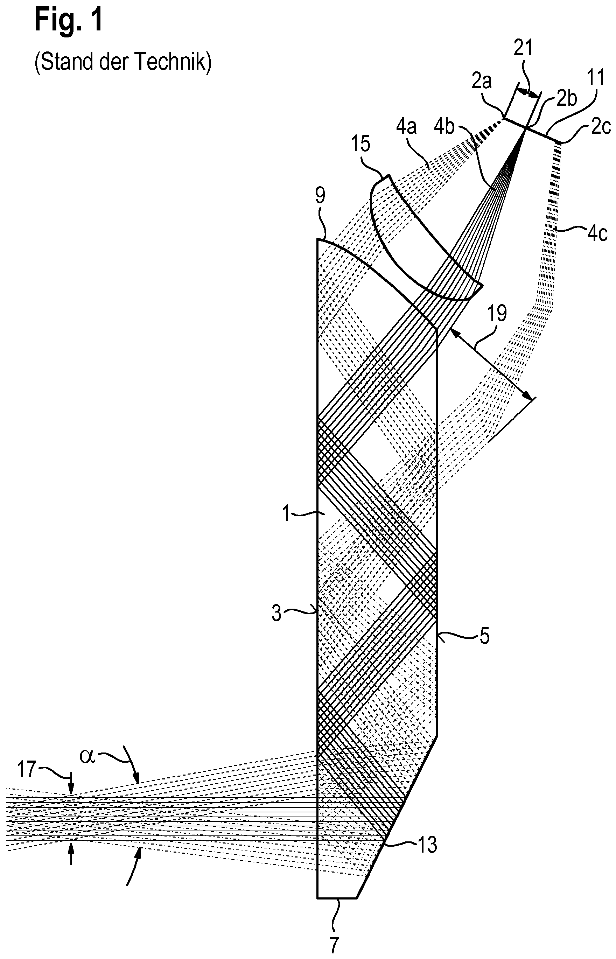

Bevor mit der Erläuterung von Ausführungsbeispielen der Erfindung begonnen wird, wird mit Bezug auf Figur 1 eine Abbildungsvorrichtung mit Lichtleiter nach Stand der Technik erläutert. Die Figur zeigt eine Abbildungsvorrichtung, wie sie in einem HMD, bspw. in einer Datenbrille, Verwendung finden kann, in einer schematischen Darstellung. Die dargestellte Abbildungsvorrichtung umfasst einen Lichtleiter 1 mit einer Rückfläche 3 und einer Vorderfläche 5. Wenn die Abbildungsvorrichtung in einem HMD zum Einsatz kommt, ist die Rückfläche beim Gebrauch des HMD dem Auge des Nutzers zugewandt und Vorderfläche 5 dem Auge abgewandt. Der Lichtleiter 1 weist außerdem eine Umfangsfläche 7 auf, von der ein geneigter Abschnitt 9 als Einkoppelfläche 9 (mit oder ohne Abbildungsfunktion) für von einem Bildgeber 11 ausgehende Strahlenbündel dient. Die Einkoppelfläche 9 bildet in dieser Abbildungsvorrichtung die Einkoppelstruktur. Die in den Lichtleiter 1 eingekoppelten Strahlenbündel werden im Lichtleiter 1 mittels Totalreflektionen an der Rückfläche 3 und der Vorderfläche 5 zu einer Auskoppelstruktur in Form eines schräg gestellten Teilerspiegels 13 geleitet, von der sie durch die Rückfläche 3 aus dem Lichtleiter 1 ausgekoppelt und den Teilerspiegel 13 passierendem Umgebungslicht überlagert werden, so dass ein Nutzer des mit der Abbildungsvorrichtung ausgestatteten HMD ein in der Umgebung schwebendes virtuelles Bild des Ausgangsbildes wahrnimmt.

Diejenige Stelle hinter der Rückfläche 3, an der alle Strahlenbündel einen gemeinsamen Querschnitt aufweisen, ist die Austrittspupille 17. Von Bedeutung ist bei HMDs in der Regel die Eye-Box. Als Eye-Box bezeichnet man denjenigen dreidimensionalen Bereich der Strahlenbündel, in dem sich die Augenpupille (nicht dargestellt) bewegen kann, ohne dass eine Vignettierung des Bildes erfolgt. Da bei einer Datenbrille der Abstand des Auges in Bezug auf die Datenbrille im Wesentlichen konstant ist, kann die Eye-Box auf eine zweidimensionale Eye-Box, welche lediglich die Drehbewegungen des Auges berücksichtigt, reduziert werden. In diesem Fall entspricht die Eye-Box im Wesentlichen der Austrittspupille der Datenbrille am Ort der Eintrittspupille des Auges. Letztere ist in der Regel durch die Augenpupille gegeben. Es wird daher im Rahmen der vorliegenden Beschreibung lediglich die Austrittspupille 17 betrachtet.

Wie aus Figur 1 ersichtlich ist, erreichen von unterschiedlichen Ausgangsbildfeldpunkten 2a, 2b, 2c des Ausgangsbildes ausgehenden Strahlenbündel 4a, 4b, 4c die Austrittspupille 17 unter unterschiedlichen Winkeln, wobei die von den äußersten Feldpunkten 2a, 2c ausgehenden Strahlenbündel 4a, 4c im Bereich der Austrittpupille 17 den Rand der Gesamtheit der Strahlenbündel bilden. Der Winkel α zwischen den von den äußersten Feldpunkten 2a, 2c ausgehenden Strahlenbündel 4a, 4c repräsentiert den Feldwinkel des Ausgangsbildes, der der Darstellung aus Figur 1 ein horizontaler Feldwinkel ist.

Für die nachfolgenden Betrachtungen ist es zweckmäßig, den Strahlengang rückwärts zu betrachten, also ausgehend von der Austrittspupille 17 durch den Lichtleiter 1 zum Bildgeber 11. Die Gesamtheit der von der Austrittspupille 17 ausgehenden Strahlenbündel weist einen Feldwinkelbereich auf, in dem sich alle Strahlenbündel befinden. Die jeweiligen Winkel der einzelnen Strahlenbündel gegen die optische Achse sind dabei kennzeichnend für den Feldpunkt, auf dem sie in dem auf dem Bildgeber 11 dargestellten Ausgangsbild schließlich auftreffen. Wie aus Figur 1 ersichtlich ist, besteht für das in Figur 1 von der Austrittspupille 17 nach rechts unten ausgehende Strahlenbündel 4c die Problematik, dass es nach der mehrfachen Reflektion im Lichtleiter 1 nicht durch die Seitenfläche 9 des Lichtleiters 1 austritt, sondern durch seine Vorderfläche 5. Die Ursache hierfür ist, dass der Feldwinkel α zu einer großen Aufweitung der Gesamtheit der Strahlenbündel führt, je weiter sich die Strahlenbündel von der Austrittspupille 17 entfernen. Dies hat zur Folge, dass bei der in Figur 1 dargestellten Einkoppelfläche 9 lediglich nicht alle Strahlenbündel durch diese Einkoppelfläche 9 und die Abbildungsoptik 15 verlaufen. Die durch die Vorderfläche 5 austretenden Strahlenbündel können daher nicht zur Abbildung beitragen. Dieser nicht zur Abbildung beitragende, also geblockte Bereich ist in Figur 1 durch einen Doppelpfeil 19 markiert. Das Blockieren hat zur Folge, dass lediglich der Ausgangsbildfeldbereich 21 in dem auf dem Bildgeber 11 dargestellten Ausgangsbild zum Erzeugen eines virtuellen Bildes beitragen kann. Die abzubildenden Ausgangsbildfelder sind daher in der in Figur 1 dargestellten Konfiguration starken Einschränkungen unterworfen. Will man diese Einschränkungen dadurch umgehen, dass die Einkopplung statt über eine Seitenfläche über die Rückfläche 3 oder die Vorderfläche 5 erfolgt, so hat dies wegen der großen Aufweitung der Gesamtheit der Strahlenbündel große Einkoppelstrukturen und große Abbildungsoptiken zur Folge. Außerdem werden die Einkoppelstruktur und die Auskoppelstruktur in diesem Fall Beugungsgitter oder Fresnelstrukturen sein, die eine stark ablenkende Wirkung zur notwendigen Erzeugung der internen Totalreflexion besitzt. Bei großen Feldwinkeln und/oder einer großen Eyebox würden Teile der vom Lichtleiter 1 übertragenen Strahlenbündel derart von dem die Auskoppelstruktur bildenden Beugungsgitter bzw. der die Auskoppelstruktur bildenden Fresnelstruktur abgelenkt, dass sie statt ausgekoppelt zu werden von einer an Luft angrenzenden Grenzfläche des Lichtleiters 1 auf die Auskoppelstruktur zurückreflektiert wird und diese ein zweites mal trifft. Derartige Teile der Strahlenbündel sind jedoch für die Abbildung unbrauchbar und führen zu einer Reduzierung der Bildfeld- bzw. Pupillengrößen. Diesen Effekt bezeichnet man auch als "Footprint-Overlap".

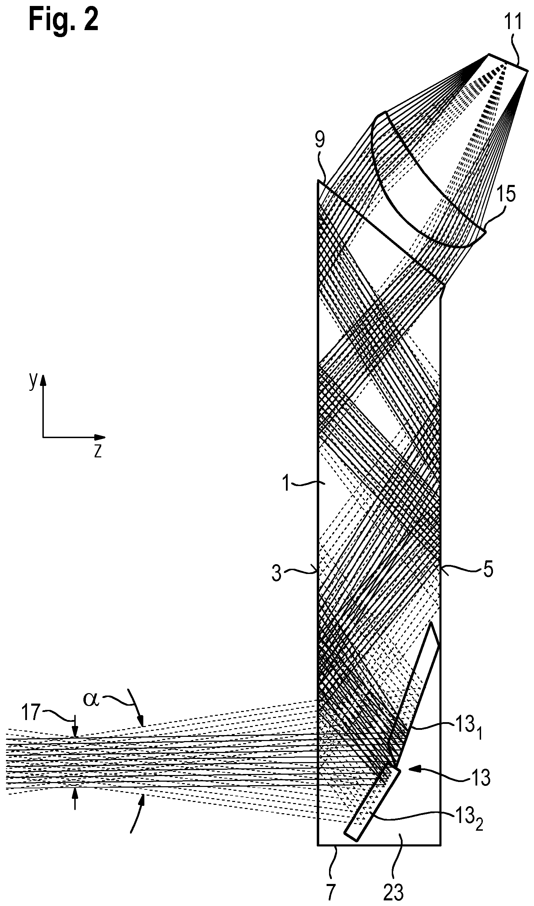

Ein erstes Ausführungsbeispiel für eine Abbildungsvorrichtung, in der die mit Bezug auf Figur 1 beschriebene Problematik vermindert ist, wird nachfolgend mit Bezug auf Figur 2 beschrieben.

Die Figur zeigt einen Lichtleiter 1 mit einer Rückfläche 3 und einer Vorderfläche 5 sowie mit einer Umfangsfläche 7. Eine Seitenfläche der Umfangsfläche 7 dient im vorliegenden Ausführungsbeispiel als Einkoppelfläche 9 und damit als Einkoppelstruktur des Lichtleiters 1. Weiterhin umfasst der Lichtleiter 1 eine Auskoppelstruktur 13 die im vorliegenden Ausführungsbeispiel durch zwei gegeneinander verkippte und als Teilerspiegel ausgestaltete ebene Auskoppelspiegel 13₁ und 13₂ gebildet ist. Die Auskoppelspielgel 13₁, 13₂ sind im vorliegenden Ausführungsbeispiel in den Lichtleiter 1 eingebettete Strukturen. Diese können beispielsweise hergestellt werden, indem der Lichtleiter 1 im Bereich der der Einkoppelfläche 9 gegenüber liegenden Seitenfläche so geschliffen wird, dass die Spiegelflächen 13₁, 13₂ gebildet werden. Diese werden dann teilverspiegelt, und schließlich wird ein keilförmiges Ansatzstück auf die teilverspiegelten Flächen aufgebracht, um die ursprüngliche Form des Lichtleiters 1 wieder herzustellen. Wie im Lichtleiter aus Figur 1 erfolgt ein Leiten der Strahlenbündel von der Einkoppelfläche 9 zu der Auskoppelstruktur durch Totalreflektion an der Rückfläche 3 und der Vorderfläche 5.

Neben dem Lichtleiter 1 zeigt Figur 2 auch einen Bildgeber 11, eine Abbildungsoptik 15 sowie die Austrittspupille 17 der Abbildungsvorrichtung.

Die Figur 2 zeigt außerdem ein Koordinatensystem, dessen x-Achse in die Blattebene hinein verläuft. Die y-Achse zeigt in der Blattebene nach oben und die z-Achse in der Blattebene nach rechts. Wie in Figur 2 zu erkennen ist, ist der Teilerspiegel 13₂ gegenüber dem Teilerspiegel 13₁ um die x-Achse und um die y-Achse verkippt. Die beiden Teilerspiegel 13₁, 13₂ bilden somit gegeneinander verkippte Teilflächen der Auskoppelstruktur 13.

Zur Erläuterung der Ausgangswirkungen der Verkippung des Teilerspiegels 13₂ gegenüber dem Teilerspiegel 13₁ um die x-Achse und der damit verbundenen Ausführung der Auskoppelstruktur 13 mit zwei gegeneinander verkippten Teilflächen wird wie mit Bezug auf Figur 1 wieder eine Betrachtung der von der Austrittspupille 17 in Richtung auf den Bildgeber 11 ausgehenden Strahlenbündel vorgenommen. Durch die Verkippung des zweiten Teilerspiegels 13₂ gegenüber des ersten Spiegels 13₁ um die x-Achse werden die von ihm reflektierten Strahlenbündel des Lichtleiters 1 im Verglich zu den vom Teilerspiegel 13₁ reflektierten Strahlenbündeln parallel zur y-z-Ebene verlagert. Dies führt dazu, dass, wenn man die von der Austrittspupille 17 unter dem Feldwinkel α ausgehenden Strahlenbündel im Bereich der Einkoppelfläche 9 betrachtet, die von den Strahlenbündeln dort eingenommene Querschnittsfläche in z-Richtung verringert wird oder, genauer gesagt, dass die Projektion der von den Strahlenbündeln im Bereich der Einkoppelstruktur 9 eingenommenen Querschnittsfläche auf die x-z-Ebene eine geringere Ausdehnung in z-Richtung besitzt, als dies beim Lichtleiter aus Figur 1 (der keine gegeneinander verkippten Teilbereiche der Auskoppelstruktur 13 aufweist) der Fall ist. Mit anderen Worten, die Strahlenbündel rücken im Bereich der Einkoppelfläche 9 näher zusammen. Dadurch kann im Vergleich zur Abbildungsvorrichtung aus Figur 1 bei einer Einkopplung der Strahlenbündel durch die in der Umfangsfläche 7 angeordnete Einkoppelfläche 9 entweder von dem Lichtleiter 1 ein größerer Feldwinkel α übertragen werden oder bei gleichem übertragenem Feldwinkel die Dicke des Lichtleiters 1 verringert werden.

Durch die Verdrehung um die y-Achse werden von der Austrittspupille 17 ausgehende Strahlenbündel je nach dem, von welchem Spiegel 13₁, 13₂ sie reflektiert werden, durch unterschiedliche, in x-Richtung übereinander liegende Bereiche des Lichtleiters 1 geleitet. Dies führt dazu, dass die von den beiden Spiegeln 13₁, 13₂ reflektierten Strahlenbündel im Lichtleiter in der Projektion auf die x-y-Ebene in x-Richtung auseinander laufen und von in x-Richtung übereinander liegenden Bereichen des Einkoppelspiegels 25 durch die Rückfläche 3 hindurch in Richtung auf in x-Richtung übereinander liegende Abbildungsoptiken 15₁, 15₂ abgelenkt werden. Durch Abbildungsoptiken 15₁, 15₂ hindurch gelangen sie schließlich auf in x-Richtung übereinander liegende Bildgeber 11₁, 11₂. Dadurch wird es möglich, das Ausgangsbild auf zwei in x-Richtung übereinander liegende Bildgeber 11₁ zu verteilen, wodurch im virtuellen Bild horizontal nebeneinander gelegene Felbereiche im Ausgangsbild vertikal übereinander angeordnete Ausgangsbildfeldbereiche sein können.

Aufgrund der Verdrehung der beiden Spiegelflächen relativ zueinander sowohl um die x-Achse als auch um die y-Achse kann in der Projektion der im Bereich der Einkoppelstruktur 25 befindlichen Strahlenbündel auf die x-z-Ebene der Platzbedarf der von den Strahlenbündeln eingenommenen Querschnittsfläche entlang der z-Richtung verringert als auch gleichzeitig in x-Richtung vergrößert werden, wobei auch eine Verlagerung von Strahlenbündeln aus der z-Richtung in die x-Richtung erfolgen kann. Die damit verbundene Freiheit in der Verteilung von Bildgeberabschnitten des Bildgebers 11 ermöglicht es, besonders große horizontale Feldwinkel α zu übertragen, was insbesondere auch die Übertragung vom 16:9 Format ermöglicht. Dabei können die Bildgeberabschnitten des Bildgebers 11 in ihrem Abstand und ihrem jeweiligen Abstrahlwinkel an den Verlauf der Strahlenbündel im Lichtleiter optimal angepasst werden.

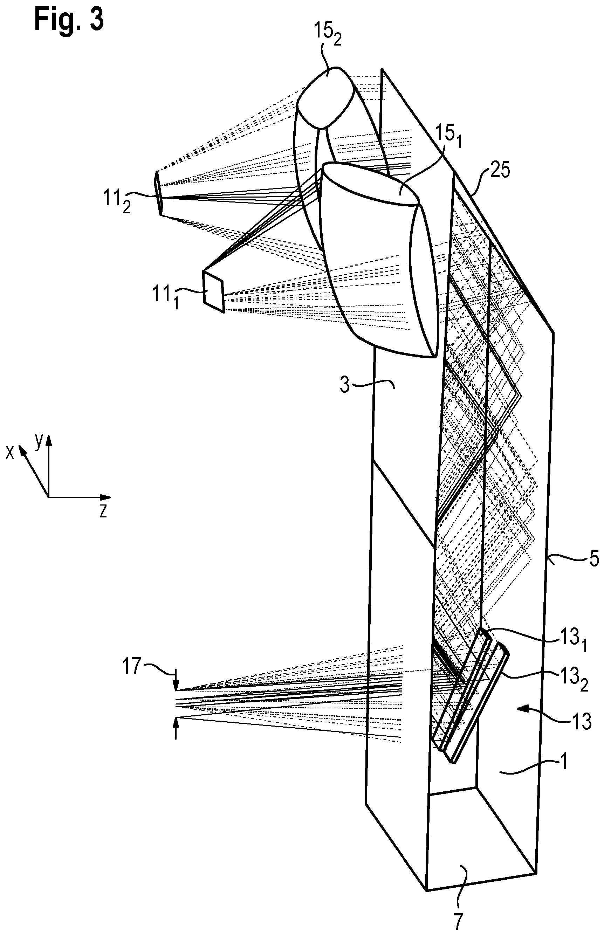

Ein zweites Ausführungsbeispiel für einen erfindungsgemäßen Lichtleiter wird nachfolgend mit Bezug auf Figur 3 beschrieben. Auch diese Figur zeigt einen Lichtleiter 1 mit einer Innenfläche 3, einer Vorderfläche 5 und einer Umfangsfläche 7, wobei die Einkopplung der Strahlenbündel in den Lichtleiter 1 jedoch durch die Rückfläche 3 erfolgt. In der Umfangsfläche 7 ist dabei eine reflektierende Einkoppelfläche 25 gebildet, über welche die durch die Rückfläche 3 in den Lichtleiter 25 eintretenden Strahlenbündel derart abgelenkt werden, dass sie mittels innerer Totalreflektion zwischen der Rückfläche 3 und der Vorderfläche 5 zu einer Auskoppelstruktur 13 geleitet werden. Von dieser Auskoppelstruktur 13 werden die Strahlenbündel schließlich durch die Rückfläche 3 hindurch in Richtung auf die Austrittspupille 17 aus dem Lichtleiter 1 ausgekoppelt.

Wie im ersten Ausführungsbeispiel umfasst die Auskoppelstruktur 13 zwei Spiegelabschnitte 13₁ und 13₂, deren reflektive Flächen um die in die Blatteben hinein laufende x-Achse sowie um die in Figur 3 in der Blattebene nach oben laufende y-Achse gegeneinander verdreht sind. Wie in Figur 3 zu erkennen ist, sind die Bildgeberabschnitte im vorliegenden Ausführungsbeispiel durch getrennte Bildgeber 11₁, 11₂ realisiert und unterschiedlich gegenüber der x-y-Ebene geneigt. Die Anpassung der Neigung gegenüber der x-y-Ebene sowie Wahl des Abstandes zwischen den beiden Bildgebern 11₁, 11₂ in x-Richtung dient im Vorliegenden Ausführungsbeispiel dazu, die Korrektion der Abbildung zu optimieren.

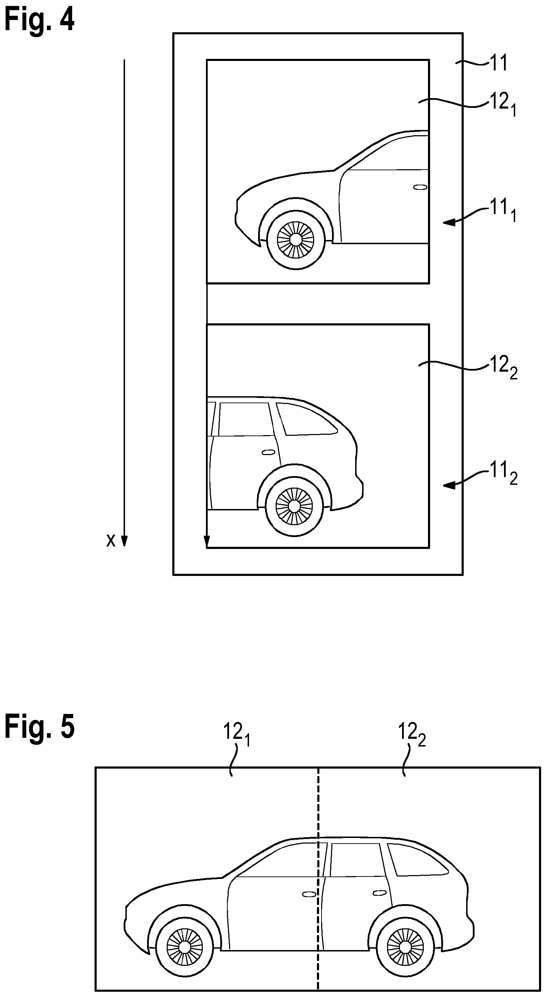

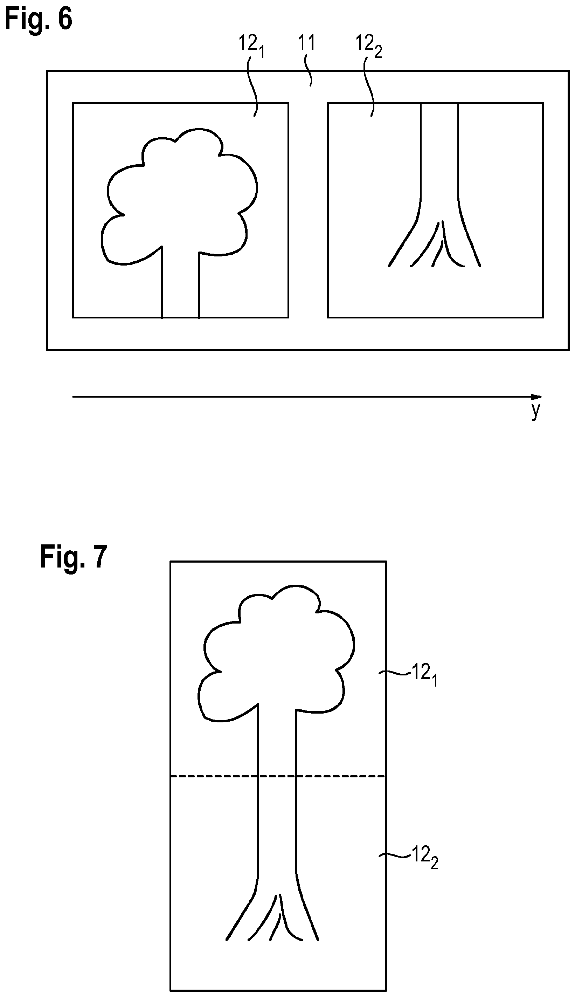

Obwohl in Figur 3 zwei getrennte Bildgeber 11₁, 11₂ Verwendung finden, besteht auch die Möglichkeit, die Ausgangsbildfeldbereiche auf Bildgeberabschnitten 11₁, 11₂ eines einzigen Bildgebers 11 darzustellen, der eine entsprechend große Ausdehnung insbesondere in x-Richtung besitzt. Ein solcher Bildgeber 11 ist in Figur 4 dargestellt. Die die Ausgangsbildfeldbereiche 12₁, 12₂ darstellenden Bildgeberabschnitte 11₁, 11₂ sind entlang x-Richtung versetzt angeordnet. Die Anordnung der Ausgangsbildfeldbereiche 12₁, 12₂ in dem von der Abbildungsvorrichtung generierten virtuellen Bild ist in Figur 5 gezeigt. Bei Verwendung eines einzigen großen Bildgebers 11 sind jedoch die Freiheitsgrade zum Optimieren der Korrektion der Abbildung verringert. Es besteht lediglich noch die Möglichkeit den Abstand der Bildgeberabschnitte 11₁, 11₂, welchen die Ausgangsbildfeldbereiche 12₁, 12₂ darstellen, in x-Richtung zu optimieren, sofern der Bildgeber 11 die entsprechende Ausdehnung in x-Richtung aufweist. Ein unterschiedliches Kippen der Bildgeberabschnitte 11₁, 11₂ gegenüber der x-z-Ebene ist hingegen bei einem einzigen großen Bildgeber 11 nicht möglich. Es sei darauf hingewiesen, dass die Bildgeberabschnitten 11₁, 11₂ auch einander überlappende Ausgangsbildfeldbereiche 12₁, 12₂ darstellen können. Eine alternative Anordnung der Bildgeberabschnitte 11₁, 11₂, in der die Bildgeberabschnitte 11₁, 11₂ in y-Richtung versetzt sind, ist in Figur 6 gezeigt, das daraus resultierende Bild in Figur 7.

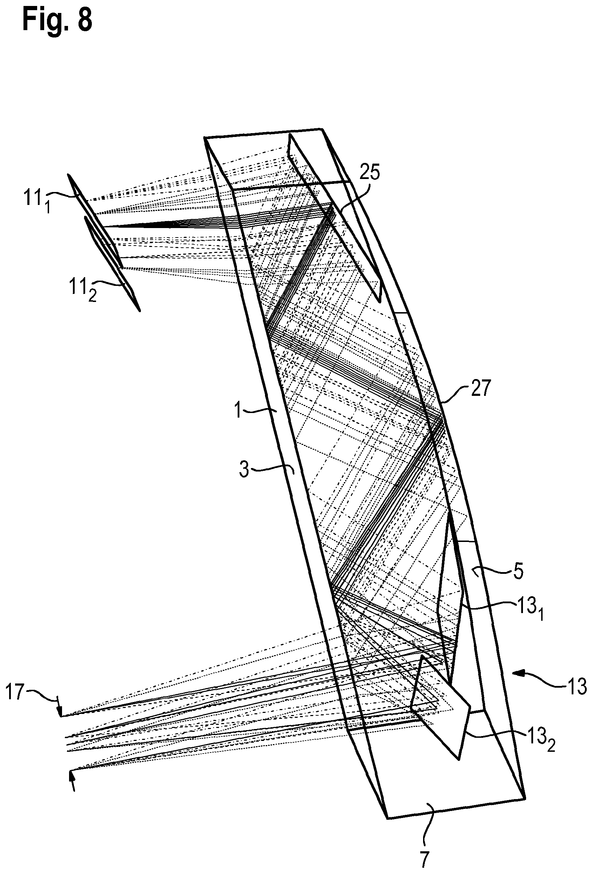

In den ersten beiden Ausführungsbeispielen hatte die Auskoppelstruktur keinerlei abbildende Funktion. Wenn die Auskoppelstruktur mit einer abbildenden Funktion versehen wird, besteht die Möglichkeit, den Platzbedarf der Strahlenbündel in z-Richtung weiter zu verringern. Ein Ausführungsbeispiel, in der die Auskoppelstruktur 13 eine abbildende Funktion besitzt, ist in Figur 8 dargestellt. Im diesem Ausführungsbeispiel sind die Teilerspiegel 13₁, 13₂, welche die Teilflächen der Auskoppelstruktur 13 bilden, sowohl um die x-Achse als auch um die y-Achse verkippt, und die Bildgeber 11₁, 11₂ sind entlang der x-Richtung zueinander versetzt angeordnet. Im Vergleich zu den vorausgegangenen Ausführungsbeispielen weist die Abbildungsvorrichtung aus Figur 8 jedoch keine Abbildungsoptik 15 bzw. 15₁, 15₂ außerhalb des Lichtleiters 1 auf. Stattdessen weisen der teildurchlässige Einkoppelspiegel 25 des Lichtleiters, die Teilerspiegel 13₁, 13₂ sowie ein weiteres reflektives Element in Form eines Teilerspiegels 27 jeweils eine abbildende Funktion auf. Der zusätzliche Teilerspiegel 27 ist dabei an der Vorderfläche 5 des Lichtleiters 1 angeordnet. Im Zusammenspiel miteinander ersetzen die abbildenden Funktionen dieser Elemente die Abbildungsoptik der vorausgegangenen Ausführungsbeispiele.

Die zum Auskoppeln verwendeten Teilerspiegel 13₁, 13₂, der teildurchlässige Einkoppelspiegel 25 und der weitere Teilerspiegel 27 weisen im vorliegenden Ausführungsbeispiel jeweils eine sammelnde Funktion auf, so dass die von den Bildgebern 11₁, 11₂ ausgehenden Strahlenbündel insgesamt kollimiert werden und als kollimierte Strahlenbündel in der Austrittspupille 17 vorliegen. Es besteht aber auch die Möglichkeit, die einzelnen Spiegel so auszugestalten, dass ihre sammelnde Wirkung nicht ausreicht, um parallele Strahlenbündel zu generieren, so dass im Bereich der Austrittspupille 17 leicht divergente Strahlenbündel vorliegen. Dies führt dazu, dass das virtuelle Bild nicht im Unendlichen wahrgenommen wird, sondern in einem endlichen Abstand. Wenn die Krümmungen der Spiegel eine Grundkrümmung und eine überlagerte Freiform umfassen, besteht zudem die Möglichkeit, die Korrektur von Bildfehlern zu optimieren.

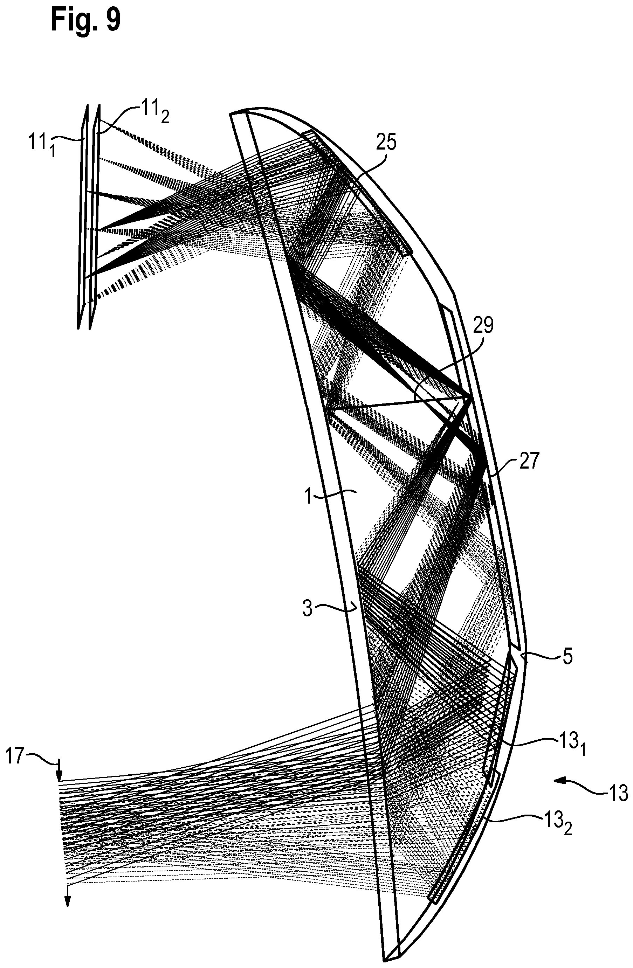

Ein weiteres Ausführungsbeispiel für die Abbildungsvorrichtung ist in Figur 9 dargestellt. Der Lichtleiter 1 dieser Abbildungsvorrichtung unterscheidet sich von dem Lichtleiter der in Figur 8 dargestellten Abbildungsvorrichtung hauptsächlich dadurch, dass die Krümmung der die Auskoppelstruktur 13 bildenden Teilerspiegel 13₁, 13₂ und des zusätzlichen Teilerspiegels 27 im Wesentlichen so ausgestaltet ist, dass im Lichtleiter 1 in einer zur y-z-Ebene senkrecht stehenden und zur x-y-Ebene nicht parallelen Ebene ein Zwischenbild 29 generiert wird. Durch diese Maßnahme kann im Bereich des teildurchlässigen Einkoppelspiegels 25 eine weitere Reduktion des Platzbedarfs der Strahlenbündel in z-Richtung erreicht werden, was den übertragbaren Feldwinkel α und damit die darzustellenden Sichtfelder weiter vergrößert und die Führung der Strahlenbündel durch die Lichtleiter 1 vereinfacht. Dabei reicht es für die Reduktion des Platzbedarfs der Strahlenbündel in z-Richtung aus, wenn in der zur y-z-Ebene senkrechten Ebene ein Zwischenbild entlang einer zur x-Richtung senkrechten Richtung vorliegt, nicht aber entlang einer zur x-Richtung parallelen Richtung.

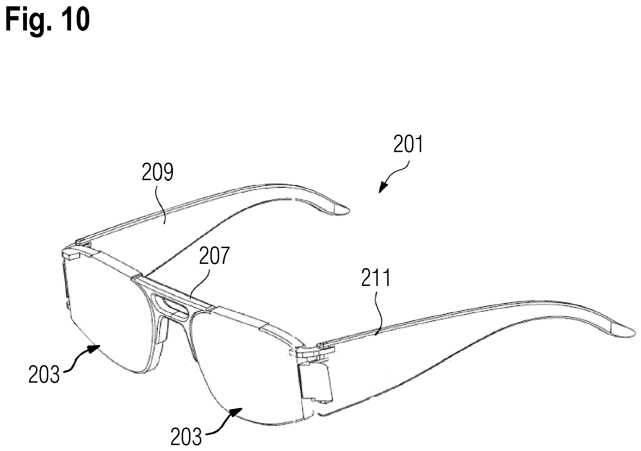

In allen Ausführungsbeispielen bildet der Lichtleiter zusammen mit dem oder den Bildgebern und ggf. einer zwischen dem oder den Bildgebern und dem Lichtleiter angeordneten Abbildungsoptik eine Abbildungsvorrichtung zum Generieren eines virtuellen Bildes auf der Basis eines auf dem Bildgeber oder den Bildgebern dargestellten Ausgangsbildes. Im Falle mehrerer Bildgeber stellen dabei die auf den jeweiligen Bildgebern dargestellten Ausgangsbildabschnitte unterschiedliche Ausgangsbildfeldbereiche des Ausgangsbildes dar. Eine derartige Abbildungsvorrichtung kann insbesondere in einem HMD zur Anwendung kommen. Als ein Beispiel für ein HMD ist in Figur 10 eine Datenbrille 201 gezeigt, also ein HMD, welches in Form einer die gleichzeitige Betrachtung eines virtuellen Bildes sowie der Umgebung ermöglichenden Brille ausgebildet ist.

Die in Figur 10 dargestellte Datenbrille 201 umfasst ein Brillengestell 207 mit Brillenbügeln 211 und im Brillengestell 207 eingefassten Brillengläsern 203. Die Brillengläser 203 sind dabei als erfindungsgemäße Lichtleiter ausgebildet, die jeweils zusammen mit einem in dem entsprechenden Brillenbügel 211 angeordneten Bildgeber (in Figur 10 nicht dargestellt) eine Abbildungsvorrichtung bilden, die gemäß einem der vorangegangenen Ausführungsbeispiele ausgebildet ist. Dabei können die Brillengläser 203 Ein- und Auskoppelstrukturen sowie ggf. eine weitere Struktur mit abbildenden Eigenschaften umfassen, wie dies mit Bezug auf die Figuren 6 und 7 beschrieben worden ist, oder zwischen den Brillengläsern 203 und den in den Brillenbügeln 211 angeordneten Bildgebern sind Abbildungsoptiken vorhanden, wie dies in den mit Bezug auf die Figuren 2 und 3 beschriebenen Ausführungsbeispielen der Fall ist. Die Einkopplung der Strahlenbündel in die Brillengläser 203 erfolgt im vorliegenden Ausführungsbeispiel über diejenigen Seitenflächen der Brillengläser 203, die an den jeweiligen Brillenbügel 211 angrenzen. Es besteht aber auch die Möglichkeit, bei der dargestellten Datenbrille 201 die Strahlenbündel für die Abbildung über die Brillenglasrückfläche in die Brillengläser 203 einzukoppeln.

Obwohl in Figur 10 eine Datenbrille als Beispiel für ein HMD dargestellt ist, versteht es sich, dass auch andere Ausführungsvarianten eines HMD mit einem erfindungsgemäßen Lichtleiter ausgestattet werden können. Wenn das HMD zur Darstellung von dreidimensionalen Bildern geeignet sein soll, sind für jedes Auge ein erfindungsgemäßer Lichtleiter und ein dem Lichtleiter zugeordnetes Display vorhanden. Falls eine dreidimensionale Darstellung nicht erfolgen soll, reicht es, eines der beiden Brillengläser 203 als erfindungsgemäßen Lichtleiter auszubilden und diesem ein Display und ggf. eine zwischen dem Display und dem Brillenglas angeordnete Abbildungsoptik zuzuordnen.

Die anhand von Ausführungsbeispielen vorgestellte Erfindung ermöglicht es, die Ausdehnung der Gesamtheit der im Bereich der Einkoppelstruktur befindlichen Strahlenbündel in der Projektion auf die x-z-Ebene zu verringern. Da beispielsweise bei einer Datenbrille die Dickenausdehnung des Brillenglases im Wesentlichen entlang der z-Richtung verläuft, stellt diese Richtung eine für die Ausdehnung der Gesamtheit der Strahlenbündel kritische Ebene dar. Die vorgestellte Erfindung ermöglicht es zudem, das darzustellende Ausgangsbildfeld im Lichtleiter auf zwei oder mehr Abschnitte entlang der x-Richtung zu verteilen und durch diese unterschiedlichen Abschnitte von den jeweiligen Bildgebern zu der Auskoppelstruktur zu transportieren. Als Freiheitsgrad für die Korrektion der Abbildung erweist es sich zusätzlich noch als vorteilhaft, wenn die Bildgeber jeweils im Abstand und Winkel an den jeweiligen von ihnen repräsentierten Ausgangsbildfeldbereich angefasst sind.

Um den größten Vorteil bzgl. des Transportierens großer Ausgangsbildfelder zu erzielen, ist eine Kombination der Ausgestaltung der Auskoppelstruktur mit zwei gegeneinander verkippten Teilflächen mit den beschriebenen Aspekten der Zwischenbildgenerierung vorteilhaft. In diesem Fall sind diese beiden Teilflächen abbildende Flächen, insbesondere Sammelflächen, und haben jeweils eine für den durch sie übertragenen Ausgangsbildfeldbereich optimierte Form. Die Brennweiten der beiden Teilflächen sind hierbei hinreichend kurz gewählt, so dass die Austrittspupille in die Nähe der Einkoppelstruktur abgebildet und vorzugsweise auch gleichzeitig ein Zwischenbild im Lichtleiter erzeugt wird. Aber auch für den Fall, dass die Teilflächen der Auskoppelstruktur nicht abbildend ausgestaltet sind, sondern lediglich aus zueinander verkippten Planflächen bestehen, wird im Bereich der Einkoppelstruktur bereits eine deutliche Reduzierung des Platzbedarfs der Strahlenbündel in z-Richtung erreicht.

Die vorliegende Erfindung ist anhand von Ausführungsbeispielen zu Erläuterungszwecken im Detail beschrieben worden. Ein Fachmann erkennt jedoch, dass Abweichungen von den Ausführungsbeispielen möglich sind, die den in den beigefügten Ansprüchen definierten Schutzbereich nicht verlassen. So besteht beispielsweise die Möglichkeit, dass die Auskoppelstruktur mehr als zwei gegeneinander verkippte Teilflächen aufweist. Ebenso können mehr als zwei Bildgeber vorhanden sein. Außerdem können die Bildgeber zusätzlich zum Versatz in x-Richtung auch noch einen Versatz in einer zur x-Richtung senkrechten Richtung aufweisen, wobei ein geeigneter Versatz in dieser Richtung jedoch durch die Dicke des Lichtleiters, also den Abstand zwischen seiner Rückfläche und seiner Vorderfläche, begrenzt ist. Schließlich besteht die Möglichkeit, statt der glatten, also stetig differenzierbaren, Spiegelflächen facettierte Spiegelflächen vorzusehen. Diese Facetten weisen dann eine Neigung gegenüber einer typischerweise glatten Grundfläche auf. Durch diese Ausgestaltung wird es möglich, die Grundflächen parallel zur Vorderfläche oder Rückfläche des Lichtleiters anzuordnen. Die Facetten der einen Teilfläche sind dabei jedoch gegenüber den Facetten der anderen Teilfläche verkippt. Die abbildende Wirkung der Einkoppelstruktur kann zudem statt durch eine entsprechend gekrümmte reflektierende Fläche auch durch eine Krümmung einer als Einkoppelstruktur dienenden Seitenfläche, durch welche die Strahlenbündel beim Einkoppeln in den Lichtleiter hindurchtreten, realisiert sein, so dass die Seitenfläche ein refraktives abbildendes Element bildet.

## Patentansprüche

1. Abbildungsvorrichtung zum Generieren eines virtuellen Bildes mit einem Bildgeber (11) mit wenigstens zwei Bildgeberabschnitten (11₁, 11₂) zum Darstellen wenigstens zweier Ausgangsbildfeldbereiche (12₁, 12₂) eines Ausgangsbildes und mit einem Lichtleiter (1), wobei der Lichtleiter (1) umfasst:
- eine Einkoppelstruktur (9, 25) zum Einkoppeln von dem Ausgangsbild ausgehender Strahlenbündel in den Lichtleiter (1) und
- eine flächige Auskoppelstruktur (13) zum Auskoppeln der in den Lichtleiter (1) eingekoppelten Strahlenbündel aus dem Lichtleiter (1), wobei die flächige Auskoppelstruktur (13) wenigstens zwei Teilflächen (13₁, 13₂) umfasst und wobei jede Teilfläche (13₁, 13₂) einem anderen der Ausgangsbildfeldbereiche (12₁, 12₂) zugeordnet ist und die von dem entsprechenden Ausgangsbildfeldbereich (12₁, 12₂) ausgehenden Strahlenbündel auskoppelt,
- wobei die Teilflächen (13₁, 13₂) der Auskopplungsstruktur (13) gegeneinander verkippt sind,
**dadurch gekennzeichnet, dass**
die Teilflächen (13₁, 13₂) der Auskoppelstruktur (13) so um zwei zueinander nicht parallele Achsen (x, y) verkippt sind, dass aus im Ausgangsbild vertikal übereinander gelegenen Ausgangsbildfeldbereichen (12₁, 12₂) im virtuellen Bild horizontal nebeneinander gelegene Feldbereiche erzeugt werden oder aus im Ausgangsbild horizontal nebeneinander gelegenen Ausgangsbildfeldbereichen (12₁, 12₂) im virtuellen Bild vertikal übereinander gelegene Feldbereiche
erzeugt werden.

2. Abbildungsvorrichtung nach Anspruch 1, **dadurch gekennzeichnet, dass** die Achsen (x, y), um die die Auskoppelflächen (13₁, 13₂) gegeneinander verkippt sind, senkrecht auf der Auskoppelrichtung (z) stehen.

3. Abbildungsvorrichtung nach Anspruch 1 oder Anspruch 2, **dadurch gekennzeichnet, dass** jede Teilfläche (13₁, 13₂) der Auskoppelstruktur (13) eine reflektive Fläche ist.

4. Abbildungsvorrichtung nach einem der Ansprüche 1 bis 3, **dadurch gekennzeichnet, dass** jede Teilfläche (13₁, 13₂) der Auskoppelstruktur (13) eine facettierte reflektive Fläche ist, die eine glatte Grundfläche und gegenüber der Grundfläche geneigte Facetten aufweist, wobei die Facetten der beiden Teilflächen (13₁, 13₂) gegeneinander verkippt sind.

5. Abbildungsvorrichtung nach einem der Ansprüche 1 bis 4, **dadurch gekennzeichnet, dass** die Auskopplungsstruktur (13) eine abbildende Funktion besitzt.

6. Abbildungsvorrichtung nach Anspruch 5, **dadurch gekennzeichnet, dass** die Auskopplungsstruktur (13) eine lichtsammelnde Funktion besitzt.

7. Abbildungsvorrichtung nach Anspruch 5 oder Anspruch 6, **dadurch gekennzeichnet, dass** er neben der Auskopplungsstruktur (13) ein weiteres reflektives Element (27) umfasst, wobei das weitere reflektive Element eine abbildenden Funktion aufweist.

8. Abbildungsvorrichtung nach einem der Ansprüche 5 bis 7, **dadurch gekennzeichnet, dass** im Lichtleiter (1) zwischen der Einkoppelstruktur (9, 25) und der Auskoppelstruktur (13) ein Zwischenbild (29) generiert wird.

9. Abbildungsvorrichtung nach einem der Ansprüche 1 bis 8, **dadurch gekennzeichnet, dass** er eine dem Auge eines Nutzers zuzuwendende Rückfläche (3), eine vom Auge des Nutzers abzuwendende Vorderfläche (5) und eine die Rückfläche (3) mit der Vorderfläche (5) verbindende Umfangsfläche (7) aufweist, wobei die Einkoppelstruktur (9) derart im Lichtleiter angeordnet ist, dass ein Einkoppeln der Strahlenbündel über die Umfangsfläche (7) erfolgen kann.

10. Abbildungsvorrichtung nach einem der Ansprüche 1 bis 9, **dadurch gekennzeichnet, dass** die Bildgeberabschnitte (11₁, 11₂) gegeneinander versetzt sind.

11. Abbildungsvorrichtung nach einem der Ansprüche 1 bis 10, **dadurch gekennzeichnet, dass** die Bildgeberabschnitte (11₁, 11₂) durch voneinander getrennte Displays gebildet sind.

12. HMD mit einer Abbildungsvorrichtung nach einem der Ansprüche 1 bis 11.

13. HMD nach Anspruch 12, welches als Datenbrille (201) ausgebildet ist.

## Claims

1. Imaging apparatus for generating a virtual image, having an image generator (11) having at least two image generator sections (11₁, 11₂) for representing at least two initial image field regions (12₁, 12₂) of an initial image and having a light guide (1), wherein the light guide (1) comprises:
- an input coupling structure (9, 25) for coupling beams coming from the initial image into the light guide (1), and
- an extensive output coupling structure (13) for coupling the beams that were coupled into the light guide (1) out of the light guide (1), wherein the extensive output coupling structure (13) comprises at least two partial faces (13₁, 13₂) and wherein each partial face (13₁, 13₂) is assigned to a different one of the initial image field regions (12₁, 12₂) and couples out the beams coming from the corresponding initial image field region (12₁, 12₂),
- wherein the partial faces (13₁, 13₂) of the output coupling structure (13) are tilted with respect to one another,
**characterized in that**
the partial faces (13₁, 13₂) of the output coupling structure (13) are tilted about two non-parallel axes (x, y) such that initial image field regions (12₁, 12₂) vertically superimposed in the initial image generate horizontally adjacent field regions in the virtual image or initial image field regions (12₁, 12₂) horizontally adjacent in the initial image generate vertically superimposed field regions in the virtual image.

2. Imaging apparatus according to Claim 1, **characterized in that** the axes (x, y) about which the output coupling faces (13₁, 13₂) are tilted with respect to one another are perpendicular to the output coupling direction (z).

3. Imaging apparatus according to Claim 1 or Claim 2, **characterized in that** each partial face (13₁, 13₂) of the output coupling structure (13) is a reflective face.

4. Imaging apparatus according to any of Claims 1 to 3, **characterized in that** every partial face (13₁, 13₂) of the output coupling structure (13) is a faceted reflective face having a smooth base face and facets that are inclined with respect to the base face, wherein the facets of the two partial faces (13₁, 13₂) are tilted with respect to one another.

5. Imaging apparatus according to any of Claims 1 to 4, **characterized in that** the output coupling structure (13) has an imaging function.

6. Imaging apparatus according to Claim 5, **characterized in that** the output coupling structure (13) has a light-converging function.

7. Imaging apparatus according to Claim 5 or Claim 6, **characterized in that**, in addition to the output coupling structure (13), it comprises a further reflective element (27), wherein the further reflective element has an imaging function.

8. Imaging apparatus according to any of Claims 5 to 7, **characterized in that** an intermediate image (29) is generated in the light guide (1) between the input coupling structure (9, 25) and the output coupling structure (13).

9. Imaging apparatus according to any of Claims 1 to 8, **characterized in that** it has a rear face (3), which is to face the eye of a user, a front face (5), which is to face away from the eye of the user, and a perimeter face (7) connecting the rear face (3) to the front face (5), wherein the input coupling structure (9) is arranged in the light guide such that the beams can be coupled in via the perimeter face (7).

10. Imaging apparatus according to any of Claims 1 to 9, **characterized in that** the image generator sections (11₁, 11₂) are offset with respect to one another.

11. Imaging apparatus according to any of Claims 1 to 10, **characterized in that** the image generator sections (11₁, 11₂) are formed by mutually separate displays.

12. HMD having an imaging apparatus according to any of Claims 1 to 11.

13. HMD according to Claim 12, which is designed as smartglasses (201).

## Revendications

1. Dispositif d'imagerie destiné à générer une image virtuelle, avec un générateur d'image (11) avec au moins deux sections (11₁, 11₂) de générateur d'image destinées à représenter au moins deux zones de champ d'image initiale (12₁, 12₂) d'une image initiale et avec un guide de lumière (1), le guide de lumière (1) comprenant :
- une structure d'injection (9, 25) destinée à injecter des faisceaux de rayons émanant de l'image initiale dans le guide de lumière (1) et
- une structure de découplage plane (13) destinée à découpler des faisceaux de rayons injectés dans le guide de lumière (1) hors du guide de lumière (1), la structure de découplage plane (13) comprenant au moins deux surfaces partielles (13₁, 13₂) et chaque surface partielle (13₁, 13₂) étant associée à une autre des zones de champ d'image initiale (12₁, 12₂) et découplant les faisceaux de rayons émanant de la zone de champ d'image initiale (12₁, 12₂),
- les surfaces partielles (13₁, 13₂) de la structure de découplage (13) étant inclinées l'une par rapport à l'autre,
**caractérisé en ce que**
les surfaces partielles (13₁, 13₂) de la structure de découplage (13) sont inclinées autour de deux axes (x, y) qui ne sont pas parallèles l'un à l'autre, de telle sorte que des zones de champ situées horizontalement côte à côte dans l'image virtuelle sont générées à partir de zones de champ d'image initiale (12₁, 12₂) situées verticalement les unes au-dessus des autres dans l'image initiale ou des zones de champ situées verticalement les unes au-dessus des autres dans l'image virtuelle sont générées à partir de zones de champ d'image initiale (12₁, 12₂) situées horizontalement côte à côte dans l'image initiale.

2. Dispositif d'imagerie selon la revendication 1, **caractérisé en ce que** les axes (x, y), autour desquels les surfaces de découplage (13₁, 13₂) sont inclinées l'une par rapport à l'autre, sont perpendiculaires à la direction de découplage (z).

3. Dispositif d'imagerie selon la revendication 1 ou la revendication 2, **caractérisé en ce que** chaque surface partielle (13₁, 13₂) de la structure de découplage (13) est une surface réfléchissante.

4. Dispositif d'imagerie selon l'une des revendications 1 à 3, **caractérisé en ce que** chaque surface partielle (13₁, 13₂) de la structure de découplage (13) est une surface réfléchissante à facettes, qui comporte une surface de base lisse et des facettes inclinées par rapport à la surface de base, les facettes des deux surfaces partielles (13₁, 13₂) étant inclinées les unes par rapport aux autres.

5. Dispositif d'imagerie selon l'une des revendications 1 à 4, **caractérisé en ce que** la structure de découplage (13) possède une fonction d'imagerie.

6. Dispositif d'imagerie selon la revendication 5, **caractérisé en ce que** la structure de découplage (13) possède une fonction de collecte de lumière.

7. Dispositif d'imagerie selon la revendication 5 ou la revendication 6, **caractérisé en ce qu'**il comprend un autre élément réfléchissant (27) en plus de la structure de découplage (13), l'autre élément réfléchissant présentant une fonction d'imagerie.

8. Dispositif d'imagerie selon l'une des revendications 5 à 7, **caractérisé en ce qu'**une image intermédiaire (29) est générée dans le guide de lumière (1) entre la structure d'injection (9, 25) et la structure de découplage (13).

9. Dispositif d'imagerie selon l'une des revendications 1 à 8, **caractérisé en ce qu'**il comporte une surface arrière (3) destinée à être tournée vers l'œil d'un utilisateur, une surface avant (5) destinée à être opposée à l'œil de l'utilisateur et une surface périphérique (7) reliant la surface arrière (3) à la surface avant (5), la structure d'injection (9) étant disposée dans le guide de lumière de telle manière que les faisceaux de rayons peuvent être injectés par la surface périphérique (7).

10. Dispositif d'imagerie selon l'une des revendications 1 à 9, **caractérisé en ce que** les sections (11₁, 11₂) de générateur d'image sont décalées les unes par rapport aux autres.

11. Dispositif d'imagerie selon l'une des revendications 1 à 10, **caractérisé en ce que** les sections (11₁, 11₂) de générateur d'image sont formées par des affichages séparés les uns des autres.

12. HMD (dispositif d'affichage tête haute) avec un dispositif d'imagerie selon l'une des revendications 1 à 11.

13. HMD selon la revendication 12, qui est réalisé sous forme de lunettes intelligentes (201).
